# NEUE EUROPÄISCHE PATENTSCHRIFT

(11) **EP 1 813 342 B2**
(45) Veröffentlichungstag und Bekanntmachung des Hinweises auf die Entscheidung über den Einspruch: **18.07.2012**
(45) Hinweis auf die Patenterteilung: 04.03.2009
(21) Anmeldenummer: 07100574.8
(22) Anmeldetag: 16.01.2007
(51) Int. Cl.: B01D 46/24, B01D 46/52, F02M 35/02, F02M 35/024

(54) **Filterelement und Filtersystem, insbesondere für die Ansaugluft einer Brennkraftmaschine**
Filter element and filter system, in particular for the intake air of a combustion engine
Elément de filtre et système de filtre, en particulier pour l'air d'aspiration d'un moteur à combustion interne

(30) Priorität: 31.01.2006 DE 202006001440 U
(43) Veröffentlichungstag der Anmeldung: 01.08.2007
(73) Patentinhaber: MANN+HUMMEL GmbH, 71638 Ludwigsburg (DE)
(72) Erfinder: Kopec, Edvard, 94036 Passau (DE); Ruhland, Klaus-Dieter, 67149 Meckenheim (DE); Steins, Oliver, 67165 Waldsee (DE); Poh, Ralf, 67434 Neustadt (DE)
(74) Vertreter: Maiwald Patentanwalts GmbH

(56) Entgegenhaltungen:
- EP-A1- 1 350 550
- WO-A-2004/020075
- DE-C1- 19 604 577
- DE-U1-202006 001 440
- US-B2- 6 966 940

## Beschreibung

### Technisches Gebiet

Die Erfindung betrifft ein Filterelement, insbesondere für die Ansaugluft einer Brennkraftmaschine oder eines Kompressors. Weiterhin betrifft die Erfindung ein Filtersystem.

### Stand der Technik

Das Dokument WO 2004/020075 offenbart ein Filtersystem für die Ansaugluft einer Brennkraftrnaschine, wobei ein Filteralement zwischen zwei Gehäuseteilen eingespannt ist Das Filterelement besteht aus einem Wickelfilter, welcher durch ein aufgewickeltes Filtermedium gebildet ist, und einer am Umfang angeordneten Profildichtung. Die Profildichtung wird durch ein elastisches Band gebildet, welches umlaufend mit dem Filterwickel verklebt ist Hierzu verfügt die Dichtung über eine parallel zum Außenumfang des Filfterwickels verlaufende Umfengsfläche, welche auf den Filfterwickel aufgeklebt wird. Um eine gute Verbindung der Dichtung mit dem Filterwickel zu gewährleisten, verfügt die Dichtung Ober einen Dichtungsfuß, welcher breiter ist als der Dichtungswulst. Der Dichtungsfuß erstreckt sich axial entlang der Umfangsfläche des Filterwickels beidseitig über die Dichtung, wodurch ein Überstand des Dichtungsfußes nach oben und unten vorhanden ist. Da die Dichtung aus einem elastischen Material besteht kann das Filterelement innerhalb der Gehäuseteile axial schwingen, wodurch das Filterelement beschädigt wird.

EP 1 350 550 beschreibt ein Filterelement mit einer umlaufenden Dichtung mit Hart- und Welchkomponente. Aus der DE 196 04 577 ist ein Filterelement mit einem Frontrahmen bekannt.

Aufgabe der Erfindung ist es, ein Filtersystem und ein Filterelement zu schaffen, wobei eine Dichtung einfach und kostengünstig an einem Filterkörper befestigt werden kann und Beschädigungen durch Schwingungen verhindert werden. Diese Aufgabe wird durch das Filter element des Anspruchs 1 und das Filtersystem des Anspruchs 8 gelöst.

### Offenbarung der Erfindung

Das erfindungsgemäße Filterelement dient der Reinigung eines Fluidstromes, insbesondere der Ansaugluft für eine Brennkraftmaschine oder einen Kompressor. Selbstverständlich kann das Filterelement auch bei anderen Filtrationsaufgaben zum Einsatz kommen. Hierzu verfügt das Filterelement über einen Filterkörper, welcher aus einem Filtermedium gebildet ist. Das Filtermedium, welches zur Abscheidung von Verunreinigungen aus dem Fluidstrom geeignet ist, kann z.B. ein gefaltetes und ringförmig geschlossenes Filterpapier sein. Es sind jedoch auch andere Ausgestaltungen des Filterkörpers, mit z.B. einem, zu einem Filterwickel mit wechselseitig verschlossenen Kanälen aufgewickelten Filterpapier, oder einem aus einem Filterschaum gebildeten Filterblock denkbar. Um den Filterkörper ist eine umlaufende Dichtung angeordnet, welche über eine Hartkomponente und eine Welchkomponente verfügt. Die Hartkomponente besteht aus einem formstabilen Material, wie z.B. Kunststoff oder Metall, wobei die Hartkomponente ringförmig ausgebildet ist Die Welchkomponente besteht aus einem elastischen Material, wie z.B. einem Elastomer, einem Thermoplastischen Elastomer (TPE) oder einem PUR-Schaum, welches eine zuverlässige Abdichtung mit einem angrenzenden Gehäuseteil bildet. Die Welchkomponente ist mit der Hartkomponente derart verbunden, das eine formstabile, um den Filterkörper verlaufende Dichtung gebildet ist. Diese Verbindung kann z.B. durch Verkleben, Verschweißen oder Verklipsen der Komponenten miteinander erfolgen. Durch die Hartkomponente ist die Dichtung derart stabil, dass Schwingungen, welche das Filterelement im eingebauten Zustand beschädigen können, verhindert werden.

Die Dichtung ist mit einem Klebstoff mit dem Filterkörper verbunden. Hierbei kann der Klebstoff eine großflächige Verbindung der Weichkomponente mit dem Filterkörper bilden. Erfindungsgemäß bildet der Klebstoff einen Klebstoffkeil zwischen der weichkomponente der Dichtung und dem Filterkörper. Hierbei wird die Dichtung über den Filterkörper geschoben, wobei sich zwischen dem Filterkörper und der Dichtung ein Zwischenraum ausbildet. In diesen Zwischenraum wird ein Flüssigkleber eindosiert, welcher nach dem Aushärten den Filterkörper dichtend mit der Dichtung verbindet Da die Dichtung gemeinsam mit dem Filterkörper die Aufnahme für den Kleber bildet, sind keine teuren Gleßschalen erforderlich um den Kleber in eine entsprechende Form zu bringen. Die vorgefertigte Dichtung ist als kostengünstiges Bauteil einfach herstellbar. Durch den Klebstoffkeil wird die Dichtung zuverlässig und fest mit dem Filterkörper verbunden, wodurch ein Verrutschen oder Lösen der Dichtung von dem Filterkörper zuverlässig verhindert wird.

Gemäß einer vorteilhaften Ausgestaltung ist die Dichtung im 2-Komponenten-Spritzguss hergestellt. Hierbei ist die Weichkomponente direkt an die Hartkomponente angespritzt. Durch das Anspritzen der Welchkomponente an die Hartkomponente ist zumindest in Teilbereichen eine unlösbare Verbindung zwischen der Hartkomponente und der Weichkomponente gebildet, wodurch die Dichtung als einteiliges Bauteil mit dem Filterkörperverbindbarist. Weiterhin kann die Dichtung einfach und kostengünstig im 2-Komponenten-Spritzgussverfahren hergestellt werden.

Bei einer vorteilhaften Ausführung der Erfindung verfügt die Weichkomponente der Dichtung über eine Dichtlippe, welche über eine linienförmig umlaufende Kontaktzone mit dem Filterkörper. Die Dichtlippe liegt derart dichtend an dem Filterkörper an, dass der Klebstoff bei der Herstellung in dem zwischen der Dichtung und dem Filterkörper gebildeten Zwischenraum verbleibt und nicht heraus fließt. Durch die linienförmige Kontaktzone liegt die Dichtlippe umlaufend dichtend an dem Filterkörper an. Unebenheiten auf dem Filterkörper können ausgeglichen werden, da sich die Dichtlippe an den Filterkörper anschmiegt und auch diesen Unförmigkeiten folgt.

Bei einer vorteilhaften Ausgestaltung der Erfindung verfügt der Klebsfoffkeil über eine höhere Steifigkeit als die Weichkomponente. Hierbei ist die Weichkomponente aus einem weichen Material gefertigt, welches optimale Dichteigenschaften in dem Gehäuse aufweist. Der Klebstoffkeil, welcher z. B. aus einem Heißkleber, Gleßharz, PU-hart, Silicon oder Epoxidharz, besteht, bewirkt dass die Dichtung über eine hohe Stabilität verfügt. Da der Filterkörper relativ zu der, in dem Gehäuse fixierten Dichtung keine Axialbewegungen ausführen kann, werden die mechanischen Belastungen für das Filterelement in dem Filtergehäuse erheblich reduziert.

Bei einer besonderen Ausgestaltung der Erfindung verfügt die Dichtung über einen umlaufenden Dichtwulst. Der Dichtwulst kann z. B. über einen rechteckförmigen runden oder ovalen Querschnitt verfügen, wobei selbstverständlich alle beliebigen Geometrien verwirklicht sein können. Der Dichtwulst ist derart ausgestaltet, dass er zwischen zwei Gehäusehälften eingespannt werden kann und so eine zuverlässige Abdichtung einer Rohseite zu einer Reinseite schafft. Der Kleber fließt in einen Zwischenraum zwischen dem Dichtwulst und dem Filterkörper. Hierbei verfügt der, durch den Klebar gebildeten Klebstoffkeil dann Ober entsprechende Radien bzw. Bögen um den Dichtwulst mit dem Filterkörper zu verbinden. Der Dichtwulst kann entweder ausschließlich durch die Weichkomponente oder durch die Weichkomponente und die Hartkomponente gebildet sein. Hierbei verfügt die. Welchkomponente Ober einen Dichtbereich, welcher durch ein Gehäuseteil verformbar ist. In diesem Dichtbereich erfolgt die Bildung der Abdichtung, so dass kein ungereinigter Volumenstrom auf die Reinseite des Filterelementes gelangen kann.

Bei einer weiteren Ausgestaltung der Erfindung verfügt die Welchkomponente über einen Dämpfungsbereich, welcher einerseits mit der Hartkomponente und andererseits mit der Gehäusegeometrie korrespondiert. In diesem Dämpfungsbereich wird das Material der Weichkomponente komprimiert und bewirkt so, dass Schwingungen des Gehäuses nur gedämpft auf das Filterelement übertragen werden. Somit verringern sich die auf das Filterelement übertragenen Schwingungen, wodurch das Filterelement entlastet wird.

Es ist vorteilhaft, dass die Weichkomponente Ober einen Hohlraum verfügt. Der Hohlraum reduziert einerseits die zur Bildung der Geometrie erforderliche Material-Masse und andererseits verändert der Hohlraum die Druckeigenschaften der Dichtung. Durch die reduzierte Materiel-Masse können sowohl Zykluszeiten verkürzt, als auch Bauteil-Gewicht eingespart werden. Durch die veränderten Druckeigenschaften der Dichtung kann mit dem gleichen Material ein Dichtungs- und Dämpfungsbereich gebildet werden, wobei das Material im Bereich des Dichtungsbereiches leichter verformbar ist, als im Dämpfungsbereich. Der Hohlraum kann vorzugsweise im Gas- oder Wasserinnendruckverfahren hergestellt sein. Diese Verfahren sind gut beherrschbar, wodurch Dichtungen in Serientertigung mit konstanten Dichteigenschaften herstellbar sind.

Bei einer besonderen Ausgestaltung der Erfindung verfügt die Hartkomponente an ihrer, der Weichkomponente abgewandten Seite über eine Struktur mit Erhöhungen und Vertiefungen. Diese Struktur korrespondiert mit einer Negativ-Struktur in dem Gehäuse. Somit ist das Filterelement nur in einer vorgegebenen Position in dem Gehäuse montierbar. Ein fehlerhaftes Einsetzen des Filterelementes in das Gehäuse wird verhindert. Weiterhin kann das Filterelement im montierten Zustand keine Radialbewegungen ausführen, wodurch Beschädigungen durch Scheuem an dem Gehäuse verhindert werden.

Das erfindungsgemäße Filtersystem nach Anspruch 8 ist insbesondere zur Reinigung von Ansaugluft einer Brennkraftmaschine vorgesehen, wobei mit diesem Filtersystem selbstverständlich auch andere Gasströme von Verunreinigungen gereinigt werden können. das Filtersystem verfügt zumindest Ober ein Filtergehäuse und ein Filterelement. Das Filtergehäuse verfügt Ober einen Einlass, durch welchen die zureinigende Luft in das Filtergehäuse einströmen kann, und einen Auslase, durch welchen die gereinigte Luft aus dem Filtergehäuse wieder ausströmen kann. Das Filtergehäuse umfasst zumindest zwei Gehäuseteile, zwischen welchen das Filterelement angeordnet ist. Das Filterelement ist zumindest mit einem der Gehäuseteile dichtend verbunden, wobei diese dichtende Verbindung durch eine an dem Filterelement angeordnete Dichtung gebildet ist. Die Dichtung verfügt über eine Hartkomponente und eine Welchkomponente, wobei die Hartkomponente mit einem der Gehäuseteile korrespondiert und die Welchkomponente das andere Gehäuseteil kontaktiert. Das, mit der Hartkomponente korrespondierende Gehäuseteil umschließt das Filterelement in axialer Richtung zumindest teilweise. Durch den Kontakt der Hartkomponente mit dem Gehäuseteil, kann zwischen dem Filterelement und diesem Gehäuseteil keine Relativbewegung erfolgen. Somit wird ein Scheuem des Filterelements an diesem Gehäuseteil und somit beschädigen des Filterelements verhindert.

Gemäß einer Weiterbildung des erfindungsgemäßen Filtersystems verfügt das mit der Welchkomponente korrespondierende Gehäuseteil Ober eine umlaufende Nase, welche dichtend mit der Welchkomponente korrespondiert. Diese Nase wird bei der Montage des Filterelementes in die Weichkomponente eingedrückt, wodurch sich die Oberfläche der Welchkomponente an die Nase anschmiegt und so eine Abdichtung erzeugt. Die Nase kann über einen beliebigen Querschnitt, z.B. dreiecksförmig, sinusförmig oder trapezförmig, verfügen. Vorzugsweise verfügt die Nase über einen, mit zunehmender Entfernung von dem Gehäuseteil, sich verjüngenden Querschnitt. Somit kontaktiert die Nase die Weichkomponente als erstes mit einer sehr geringen Fläche. Mit zunehmendem Eindringen der Nase in die Weichkomponente vergrößert sich die Querschnittsfläche der Nase. Im Bereich der Nase erfolgt eine größere Verformung der Weichkomponente, als in den, der Nase benachbarten Bereichen. Somit ist im Bereich der Nase eine zuverlässige Abdichtung erzeugt, wobei zur Erzeugung der Abdichtung erforderliche Kraft gering ist.

Bei einer vorteilhaften Ausführung verfügt das mit der Hartkomponente korrespondierende Gehäuseteil über eine Geometrie mit Erhöhungen und/oder Vertiefungen. Die Hartkomponente verfügt ebenfalls über Erhöhungen und/oder Vertiefungen, wobei die Erhöhungen des Gehäuseteils in Vertiefungen der Hartkomponente und die Erhöhungen der Hartkomponente in Vertiefungen in dem Gehäuseteil eingreifen. Die Geometrien korrespondieren derart miteinander, dass das Einsetzen eines falschen Filterelementes oder das falsche Einsetzten eines Filterelementes verhindert wird. Hierbei kann dann das Filtergehäuse nicht geschlossen werden und der Fehler wird erkennbar. Somit wird verhindert, dass das Filtersystem mit einem fehlerhaften oder fehlerhaft montierten Filterelement betrieben wird und Beschädigungen an der Brennkraftmaschine erzeugt werden. Nur wenn ein geeignetes Filterelement in der vorgegebenen Orientierung eingesetzt ist, kann das Gehäuse geschlossen und Beschädigungen der Brennkraftmaschine durch mangelhaft gereinigte Luft verhindert werden.

### Kurze Beschreibung der Zeichnungen

Die Erfindung wird nachfolgend anhand von schematischen Ausführungsbeispielen näher erläutert. Hierbei zeigt:

Figur 1 ein Filtersystem in einer teilweise geschnittenen Darstellung,

Figur 2 einen Ausschnitt aus einem Filtersystem im Schnitt,

Figur 3 einen vergrößerten Ausschnitt gemäß Figur 2,

Figur 4 einen Ausschnitt mit einer alternativen Ausgestaltung,

Figur 5 einen Ausschnitt mit einer weiteren Alternative,

Figur 6 einen Ausschnitt mit einer weiteren Alternative,

Figur 7 einen Ausschnitt mit einer weiteren Alternative,

Figur 8 eine Draufsicht auf die Hartkomponente und

Figur 9 einen Ausschnitt einer Dichtung mit Schlüssel-Schloss-Verbindung.

### Ausführungsform(en) der Erfindung

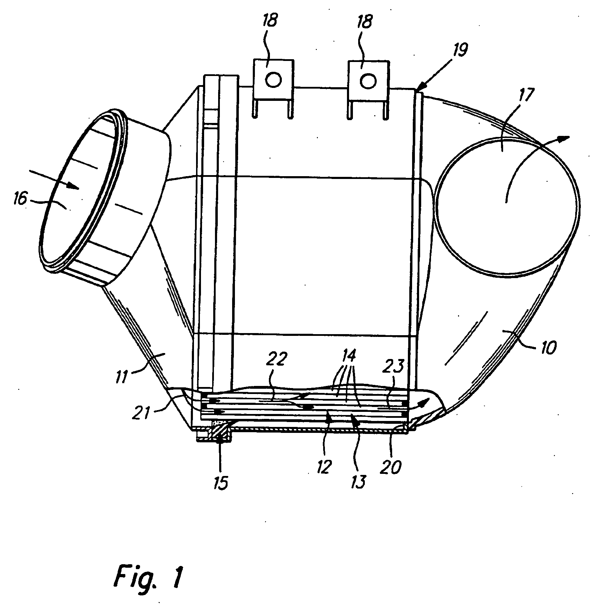

In Figur 1 ist ein Filtersystem in der Hauptansicht mit einem Teilschnitt in der unteren Bildhälfte dargestellt. Das Filtersystem weist ein Gehäuse 10 mit einem Deckel 11 und einem ovalen Filtereinsatz 12 auf. Der Deckel 11 ist derart gestaltet, dass er das Gehäuse 10 verschließt, wobei das Gehäuse 10 gemeinsam mit dem Deckel 11 ein Filtergehäuse bildet. Der Filtereinsatz 12 verfügt über einen Filterwickel 13 mit wechselseitig verschlossenen Kanälen 14 und eine Dichtung 15. Die Dichtung 15 ist zwischen dem Deckel 11 und dem Gehäuse 10 angeordnet. Die Ausgestaltung und Anordnung der Dichtung 15 wird anhand der nachfolgenden Figuren näher beschrieben.

Der Deckel 11 verfügt über einen Einlass 16 durch welchen die zu reinigende Luft in das Filtergehäuse einströmen kann. Der Auslass 17 für die gereinigte Luft ist in dem Gehäuse 10 angeordnet. Der Filtereinsatz 12 ist derart in dem Filtergehäuse angeordnet, dass der Einlass 16 dichtend von dem Auslass 17 getrennt ist, wobei sich der Filtereinsatz 12 in axialer Richtung in das Gehäuse 10 erstreckt. An dem Gehäuse 10, welches bei diesem Ausführungsbeispiel zweiteilig ausgebildet ist, sind Befestigungslaschen 18 vorgesehen, mit welchen das Gehäuse 10 in seinem Bauraum fixiert wird. Durch die zweiteilige Ausbildung des Gehäuses 10 ist dieses in einem Kunststoff-Spritzgussverfahren einfach und kostengünstig herstellbar. Die beiden Gehäuseteile sind in einem Verbindungsbereich 19 dichtend miteinander verbunden, wobei diese Verbindung im Bereich durch Schweißen oder Kleben erzeugt wird. Im Inneren des Gehäuses 10 stützt sich der Filtereinsatz 12 an einem Absatz 20, welcher in der Nähe des Verbindungsbereiches 19 angeordnet ist, ab. Durch die nachfolgend beschriebene Ausgestaltung der Dichtung 15 wird verhindert, dass der Filtereinsatz 12 Relativbewegungen zu dem Gehäuse 10 ausführt. Dadurch werden Scheuerstellen an dem Filtereinsatz 12 verhindert.

Die zu reinigende Luft strömt durch den Einlass 16 in das, durch den Deckel 11 und das Gehäuse 10 gebildete, Filtergehäuse ein. Die ungereinigte Luft dringt in Pfeilrichtung 21 die offenen Kanäle 14 des Filtereinsatzes 12 ein. Beim Übertritt (Pfeil 22) der Luft in die benachbarten Kanäle 14, welche in Richtung des Auslasses 17 geöffnet sind, werden die Verunreinigungen zurückgehalten. Aus diesen, in Richtung des Auslasses 17 offenen Kanälen 14 strömt die gereinigte Luft in Pfeilrichtung 23 aus und gelangt durch den Auslass 17 aus dem Filtergehäuse.

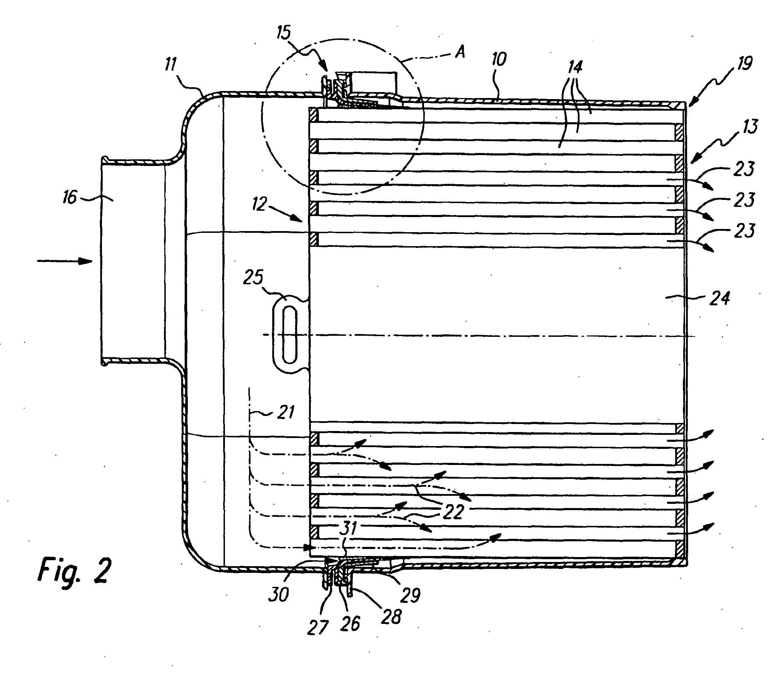

In Figur 2 ist Ausschnitt aus dem Filtersystem gemäß Figur 1 im Schnitt dargestellt. Der Figur 1 entsprechende Bauteile sind mit gleichen Bezugszeichen versehen. Von dem zweiteiligen Gehäuse 10 ist nur der Teil dargestellt, welcher den Filtereinsatz 12 umschließt. Der andere Teil des Gehäuses 10, an welchem der Auslass 17 angeordnet ist, ist nicht dargestellt. Der Filterwickel 13, welcher durch ein Filtermedium mit wechselseitig verschlossenen Kanälen 14 gebildet ist, ist spiralförmig um ein Schwert 24 gewickelt. Das Schwert 24 ist dichtend und unlösbar mit dem Filterwickel 13 verbunden. An der, dem Einlass 16 zu gewandten Seite des Schwerts 24 ist ein Entnahmegriff 25 angeordnet. Mit dem Entnahmegriff 25 kann der Filtereinsatz 12 nach dem Entfernen des Deckels 11 aus dem Gehäuse 10 gezogen werden.

Die Dichtung 15 des Filtereinsatzes 12 verfügt über eine ringförmig ausgebildete Hartkomponente 26 und eine mit der Hartkomponente 26 verbundene Weichkomponente 27. Die Weichkomponente 27 weist eine Dichtlippe 29 auf, welche den Filterwickel 13 linienförmig kontaktiert. Die Dichtlippe 29 umschließt den Umfang des Filterwickels 13 teilweise, wobei zwischen der Dichtlippe 29 und dem Filterwickel 13 ein Zwischenraum 30 gebildet ist, in welchen ein Kleber 31 eindosiert ist. Der Kleber 31 verbindet die Weichkomponente 27 mit dem Filterwickel 13. Durch den Verbund der Weichkomponente 27 mit der Hartkomponente 26 und dem Kleber 31 ist ein fester Verbund mit dem Filterwickel 13 erzeugt, wobei der Filterwickel 13 keine axialen Relativberegungen zu der, aus Hart- und Weichkomponente 26, 27 gebildeten Dichtung 15 ausführen kann.

Die Hartkomponente 26 kontaktiert den oval ausgebildeten Bereich des Gehäuses 10 im Bereich einer Dichtungsauflage 28. Da sowohl die Hartkomponente 26, als auch die Dichtungsauflage 28 des Gehäuses 10 nahezu unflexibel ist, kann das Filterelement 12 keine Relativbewegung zu dem Gehäuse 10 ausführen.

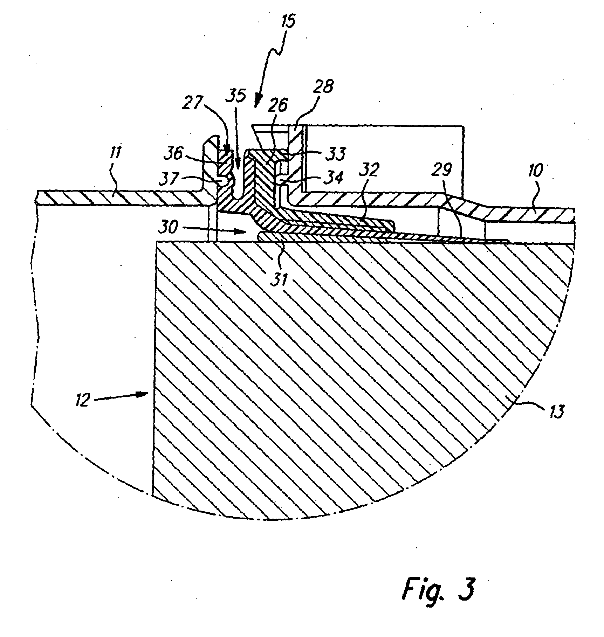

Figur 3 zeigt einen vergrößerten Ausschnitt A gemäß Figur 2. Der Figur 2 entsprechende Bauteile sind mit gleichen Bezugszeichen versehen. Die Hartkomponente 26 verfügt über einen Stützbereich 32, welcher die Dichtlippe 29 der Weichkomponente 27 derart abstützt, dass diese sich beim Eindosieren des Klebers 31 nicht von dem Filterwickel 13 abhebt. Außerdem wird die Dichtung 15 derart versteift, dass Schwingungen zwischen dem Außenumfang der Dichtung 15 und dem Filterwickel 13 verhindert werden. Weiterhin verfügt die Hartkomponente 26 über einen ringförmig umlaufenden Auflagewulst 33, welcher sich auf der Dichtungsauflage 28 des Gehäuses 10 abstützt. An der Dichtungsauflage 28 ist zusätzlich ein ebenfalls ringförmig umlaufender Wulst 34 angeordnet, auf welchem sich die Hartkomponente 26 abstützt. Somit verfügt die Hartkomponente 26 über zwei Auflagestellen an dem Gehäuse 10, welche linienförmig ausgebildet sind bzw. über eine Ringflächige verfügen.

Die Weichkomponente 27, welche an die Hartkomponente 26 anvulkanisiert ist, verfügt neben der Dichtlippe 29 noch über einen u-förmig ausgebildeten Dichtbereich 35. Die U-Form ist zum Außenumfang hin geöffnet. Eine Flanke der U-Form ist fest mit der Hartkomponente 26 verbunden. Die gegenüberliegende Flanke 36 kontaktiert den Deckel 11, wobei der Deckel 11 über eine umlaufende Nase 37 verfügt, welche sich in die Flanke 36 der Weichkomponente 27 drückt und so eine Abdichtung zwischen dem Filtereinsatz 12 und dem Deckel 11 des Filtergehäuses bewirkt.

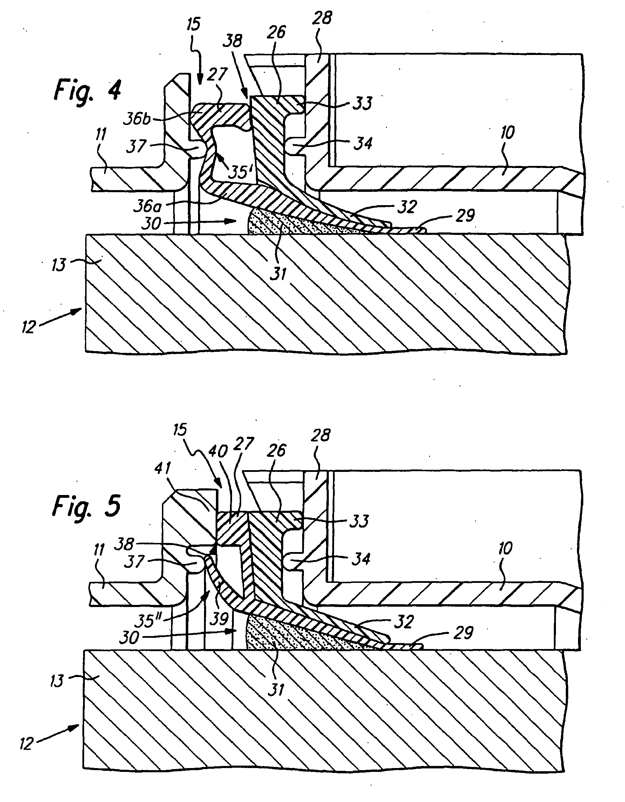

In Figur 4 ist eine alternative Ausgestaltung zu der in Figur 3 gezeigten Dichtung 15 dargestellt. Der Figur 3 entsprechende Bauteile sind mit gleichen Bezugszeichen versehen. Der Unterschied zu der in Figur 3 gezeigten Dichtung 15 besteht in der Geometrie der Weichkomponente 27. Bei dieser Ausgestaltung verfügt die Weichkomponente 27 ebenfalls über eine u-förmige Geometrie, wobei die U-Form in Richtung der Hartkomponente 26 geöffnet ist. Die radial innen liegende Flanke 36a der U-Form geht in die Dichtlippe 29 über, wobei die feste Verbindung zwischen dem Stützbereich 32 und der Dichtlippe 29 gebildet ist. Die radial außen liegende Flanke 36b ist verdickt ausgeführt. Durch das Aufsetzen des Deckels 11 auf das Gehäuse 10 erfolgt eine Verpressung der außen liegenden Flanke 36b. In diesem verpressten Bereich ist ein Dämpfungsbereich 38 zwischen der Dichtung 15 und dem Deckel 11 gebildet. Somit werden weniger Schwingungen von dem Deckel 11 auf den Filtereinsatz 12 und das Gehäuse 10 übertragen.

Die, die Flanken 36a, 36b verbindende Seite der U-Form bildet bei dieser Ausführung den Dichtbereich 35' zwischen der Weichkomponente 27 und dem Deckel 11.

In Figur 5 ist eine weitere alternative Ausgestaltung zu den in Figur 3 und 4 gezeigten Dichtungen 15 dargestellt. Den Figuren 3 oder 4 entsprechende Bauteile sind mit gleichen Bezugszeichen versehen. Der Unterschied zu der in Figur 3 gezeigten Dichtung 15 besteht in der Geometrie der Weichkomponente 27 und des Deckels 11. Die Weichkomponente 27 verfügt neben der Dichtlippe 29, welche an dem Filterwickel 13 anliegt, über eine weitere umlaufende lippenförmige Dichtgeometrie 39. Die mit der Hartkomponente 26 verbundene Dichtlippe 29 geht direkt in die Dichtgeometrie 39 über. Die Dichtgeometrie 39 liegt in montiertem Zustand an der Nase 37 dichtend an. Weiterhin verfügt die Weichkomponente 27 über einen Dämpfungsfuß 40, welcher über einen quaderförmigen Ringquerschnitt fest mit der Hartkomponente 26 verbunden ist. Zwischen dem Dämpfungsfuß 40 und einem an den Deckel 11 angeformten Absatz 41 ist ein Dämpfungsbereich 38 gemäß Figur 4 ausgebildet, da der Dämpfungsfuß 40 bei der Montage des Deckels 11 verpresst wird.

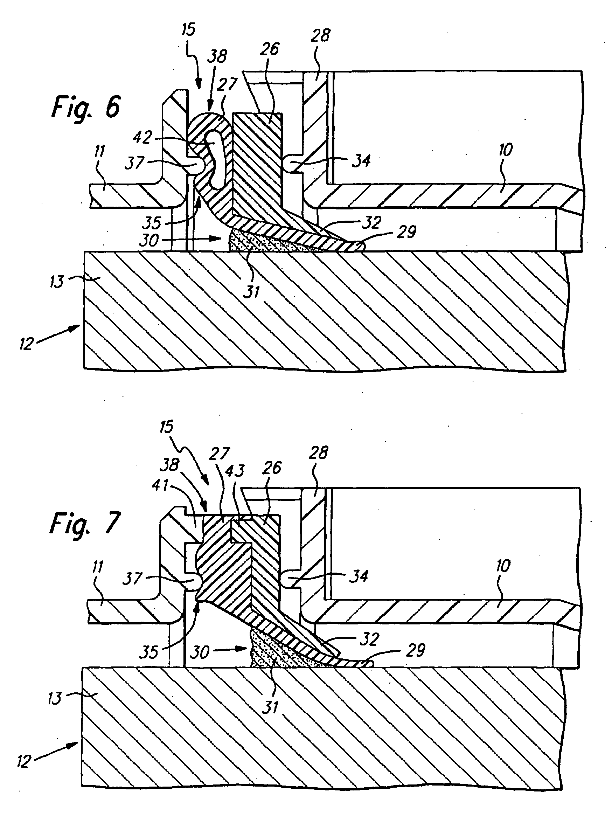

In Figur 6 ist eine alternative Ausgestaltung zu den in Figur 3 bis 5 gezeigten Dichtungen 15 dargestellt. Der Figur 3 entsprechende Bauteile sind mit gleichen Bezugszeichen versehen. Der Unterschied zu der in Figur 3 gezeigten Dichtung 15 besteht in der Geometrie der Weich- und Hartkomponente 27, 26. Die Hartkomponente 26 ist bei diesem Ausführungsbeispiel als flacher Ring mit angeformtem Stützbereich 32 ausgebildet. Die Weichkomponente 27 verfügt über einen Hohlraum 42, welcher im Gasinnendruckverfahren hergestellt ist. Durch den Hohlraum 42 ist die Wandstärke der Weichkomponente 27 derart ausgebildet, dass mittig des Hohlraumes 42 mit der Nase ein Dichtbereich 35 ausgebildet ist. Im radial äußeren Bereich der Weichkomponente 27 ist ein Dämpfungsbereich 38 ausgebildet, welcher durch ein Verpressen des Weichkomponenten-Materials zwischen dem Deckel 11 und der Hartkomponente 26 erreicht wird.

In Figur 7 ist eine alternative Ausgestaltung zu den in den Figuren 3 bis 6 gezeigten Dichtungen 15 dargestellt. Den Figuren 3 bis 6 entsprechende Bauteile sind mit gleichen Bezugszeichen versehen. Der Unterschied zu de in Figur 3 gezeigten Dichtung 15 besteht in der Geometrie der Weichkomponente 27 und der Hartkomponente 26. Weiterhin verfügt der Deckel 11 über einen Absatz 41 gemäß Figur 5. Die Hartkomponente 26 verfügt neben dem, an den ringförmigen Bereich angeformten Stützbereich 32 noch über einen Ansatz 43, welcher in Richtung der Weichkomponente 27 ragt. Die Weichkomponente 27 verfügt, abgesehen von dem in sie hineinragenden Ansatz 43 über einen quaderförmigen Querschnitt mit angeformter Dichtlippe 29. Da das Material der Weichkomponente 27 sehr flexibel ist lässt sich das Material durch die Nase 37 leicht komprimieren, wodurch der Dichtbereich 35 gebildet ist. Das Material der Weichkomponente 27, welches zwischen dem Absatz 41 des Deckels 11 und dem Ansatz 43 der Hartkomponente 26 angeordnet ist, wird derart verpresst, dass ein Dämpfungsbereich 38 gebildet ist. Somit ist auch bei dieser Ausführung der Dichtbereich 35 funktionell und geometrisch von dem Dämpfungsbereich 38 getrennt.

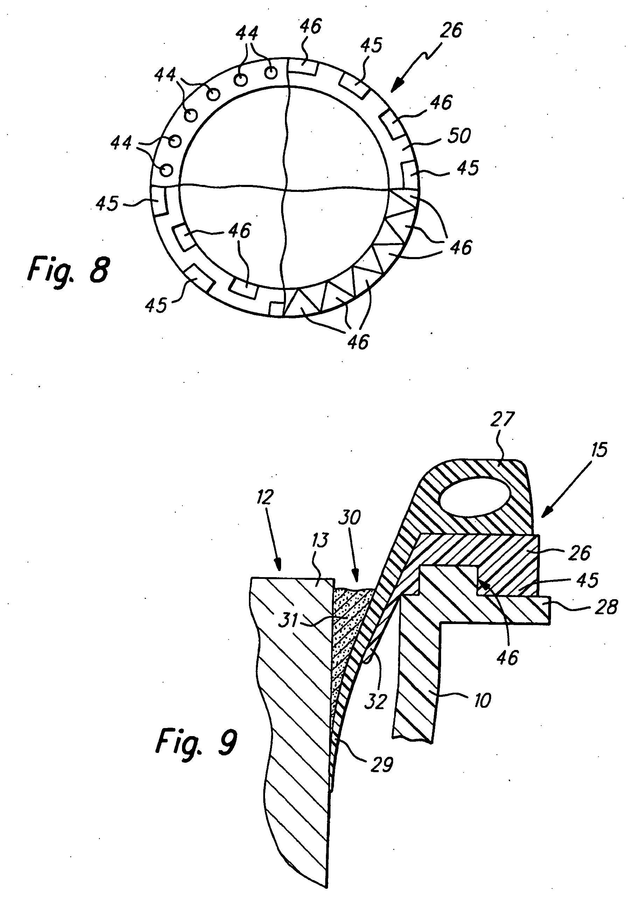

In Figur 8 ist eine Draufsicht auf die Hartkomponente 26 dargestellt, wobei dies die, mit dem Gehäuse 10 korrespondierende Seite ist. Die dargestellte Rundform ist in vier unterschiedliche Sektoren mit unterschiedlichen Ausführungsbeispielen unterteilt. Anstelle einer kreisrunden Form kann die Hartkomponente 26 auch über eine ovale oder elliptische Form verfügen.

Im linken oberen Bereich ist die Hartkomponente 26 derart gestaltet, dass der ebene ringförmige Bereich Bohrungen 44 aufweist. In diese Bohrungen 44 können Stifte (nicht dargestellt), welche an dem korrespondierenden Gehäuse 10 angeordnet sind, eingreifen. Durch das Eingreifen der Stifte in die Bohrungen 44 ist der Filtereinsatz 12 in dem Gehäuse 10 gemäß der Figuren 1 und 2 gegen radiale Bewegungen gesichert. Die Größe und Anzahl der Bohrungen 44 ist beliebig. Außerdem ist die Verteilung der Bohrungen auf dem Umfang beliebig. Bei einereinzigen Bohrung 44 und einem einzigen Stift kann der Filtereinsatz 12 nur in einer einzigen Position montiert werden. Wenn mehrere Bohrungen 44 in der Hartkomponente 26 vorgesehen sind, jedoch nur ein Stift in dem Gehäuse 10 vorgesehen ist, entspricht die Anzahl der Montagepositionen des Filtereinsatzes 12 der Anzahl der Bohrungen 44. Bei mehreren Bohrungen 44 und mehreren Stiften können diese in regelmäßigen Abständen angeordnet sein, wodurch mehrere Montagepositionen vorgesehen sind. Es können die Abstände zwischen den Bohrungen und den Stiften auch derart gewählt werden dass nur bestimmte Einbauvarianten möglich sind.

Anstelle der Bohrungen 44 können, wie im rechen oberen Bereich dargestellt auch rechteckige Erhöhungen 45 und Vertiefungen 46 bezogen auf eine Kreisringfläche 50 vorgesehen sein, welche abwechselnd angeordnet sind. Die Erhöhungen 45 überragen die Kreisringfläche 50 in axialer Richtung nach oben und die Vertiefungen 46 bilden eine Stufe nach unten. Die Anzahl und Anordnung der Erhöhungen 45 und Vertiefungen 46 kann, entsprechend den Ausführungen zu den Bohrungen 44 beliebig sein.

Im rechten unteren Bereich sind die Erhöhungen 45 dreieckförmig ausgebildet und gleichmäßig über den Umfang verteilt angeordnet.

Im linken unteren Bereich sind die Erhöhungen 45 im äußeren Umfangsbereich und die Vertiefungen 46 im inneren Umfangsbereich angeordnet, wobei die Abstände zwischen den Erhöhungen 45 zueinander bzw. zwischen den Vertiefungen 46 zueinander gleich sind.

In Figur 9 ist ein Ausschnitt der Dichtung 15 mit einer Schlüssel-Schloss-Verbindung dargestellt. Die Ausgestaltung der Weichkomponente 27 entspricht der in Figur 6 gezeigten Ausführung, wobei der Deckel 11 nicht dargestellt ist. Die Dichtungsauflage 28 des Gehäuses 10 verfügt über die entsprechende Negativ-Geometrie der Erhöhungen 45 bzw. Vertiefungen 46 der Hartkomponente 26. Somit ragen Teile der Dichtungsauflage 28 in die Vertiefungen 46 der Hartkomponente 26 hinein. Erhöhungen 45 der Hartkomponente 26 ragen in Aussparungen der Dichtungsauflage 28 hinein. Somit ist eine Schlüssel-Schloss-Verbindung zwischen dem Gehäuse 10 und dem Filtereinsatz 12 gebildet, welche ein fehlerhaftes Einsetzen des Filtereinsatzes 12 verhindert.

## Patentansprüche

1. Filterelement (12), insbesondere für die Ansaugluft einer Brennkraftmaschine, aufweisend einen Filterkörper (13), insbesondere einen Filterwickel (13) und eine, um den Filterkörper (13) umlaufend angeordnete, Dichtung (15), wobei die Dichtung (15) über eine Hartkomponente (26) und eine Weichkomponente (27) verfügt, wobei die Dichtung (15) mit einem Klebstoff (31) mit dem Filterkörper (13) verbunden ist, wobei der Klebstoff (31) einen Klebstoffkeil zwischen der Weichkomponente (27) der Dichtung (15) und dem Filterkörper bildet und der Klebstoff eine direkte Verbindung der Weichkomponente mit dem Filterkörper bildet.

2. Filterelement (12) nach Anspruch 1, wobei die Dichtung (15) im 2-Komponenten-Spritzguss hergestellt ist, wobei die Weichkomponente (27) zumindest in Teilbereichen unlösbar mit der Hartkomponente (26) verbunden ist.

3. Filterelement (12) nach einem der vorangehenden Ansprüche, wobei die Weichkomponente (27) der Dichtung (15) über eine Dichtlippe (29) verfügt, welche über eine linienförmig umlaufende Kontaktzone mit dem Filterkörper (13) verfügt, wobei die Dichtlippe (29) derart an dem Filterkörper (13) anliegt, dass der Klebstoff bei der Herstellung in dem zwischen der Dichtung (15) und dem Filterkörper (13) gebildeten Zwischenraum verbleibt.

4. Filterelement (12) nach einem der Ansprüche 1 oder 2, wobei die Dichtung (14) über einen umlaufenden Dichtwulst (17) verfügt, welcher zwischen zwei Gehäusehälften (24, 25) einspannbar ist, wobei die Weichkomponente (27) über einen Dichtbereich verfügt.

5. Filterelement (12) nach einem der vorangehenden Ansprüche, wobei die Weichkomponente (27) über einen Dämpfungsbereich (38) verfügt.

6. Filterelement nach einem der vorangehenden Ansprüche, wobei die Weichkomponente (27) über einen Hohlraum(42) verfügt, welcher vorzugsweise im Gas- oder Wasserinnendruckverfahren hergestellt ist.

7. Filterelement nach einem der vorangehenden Ansprüche, wobei die Hartkomponente (26) an ihrer, der Weichkomponente (27) abgewandten Seite über eine Struktur mit Erhöhungen (45) und Vertiefungen (46) verfügt.

8. Filtersystem, insbesondere für die Ansaugluft einer Brennkraftmaschine, aufweisend zumindest ein Filtergehäuse (10,11) mit einem Einlass (16) und einem Auslass (17), und ein Filterelement (12), wobei das Filterelement (12) einen Filterkörper (13) und eine um den Filterkörper (13) umlaufend angeordnete Dichtung (15) aufweist, wobei die Dichtung (15) über eine Hartkomponente (26) und eine Weichkomponente (27) verfügt, wobei die Dichtung (15) mit einem Klebstoff (31) mit dem Filterkörper (13) verbunden ist, wobei der Klebstoff (31) einen Klebstoffkeil zwischen einer oder beider der Komponenten (26, 27) der Dichtung (15) und dem Filterkörper bildet, wobei das Filtergehäuse (10,11) über zumindest zwei Gehäuseteile (10, 11) verfügt, wobei das Filterelement (12) mittels der Dichtung (15) dichtend zwischen den Gehäuseteilen (10, 11) angeordnet ist, wobei die Dichtung (15) mit ihrer Hartkomponente (26) eines der Gehäuseteile (10, 11) und mit ihrer Weichkomponente (27) das andere Gehäuseteil (10, 11) kontaktiert.

9. Filtersystem nach Anspruch 8, wobei das mit der Weichkomponente (27) korrespondierende Gehäuseteil (10, 11) über eine umlaufende Nase (37) verfügt, welche dichtend mit der Weichkomponente (27) korrespondiert.

10. Filtersystem nach einem der Ansprüche 8 oder 9, wobei das, mit der Hartkomponente (26) korrespondierende Gehäuseteil (10, 11) über eine Geometrie mit Erhöhungen und/oder Vertiefungen verfügt.

11. Filtersystem nach Anspruch 8, wobei die Dichtung (15) im 2-Komponenten-Spritzguss hergestellt ist, wobei die Weichkomponente (27) zumindest in Teilbereichen unlösbar mit der Hartkomponente (26) verbunden ist.

12. Filtersystem nach einem der Ansprüche 8 und 11, wobei die Weichkomponente (27) der Dichtung (15) über eine Dichtlippe (29) verfügt, welche über eine linienförmig umlaufende Kontaktzone mit dem Filterkörper (13) verfügt, wobei die Dichtlippe (29) derart an dem Filterkörper (13) anliegt, dass der Klebstoff bei der Herstellung in dem zwischen der Dichtung (15) und dem Filterkörper (13) gebildeten Zwischenraum verbleibt.

13. Filtersystem nach einem der Ansprüche 8, 11 und 12, wobei die Dichtung (14) über einen umlaufenden Dichtwulst (17) verfügt, welcher zwischen zwei Gehäusehälften (24, 25) einspannbar ist, wobei die Weichkomponente (27) über einen Dichtbereich verfügt.

14. Filtersystem nach einem der Ansprüche 8 und 11 bis 13, wobei die Weichkomponente (27) über einen Dämpfungsbereich (38) verfügt.

15. Filtersystem nach einem der Ansprüche 8 und 11 bis 14, wobei die Weichkomponente (27) über einen Hohlraum(42) verfügt, welcher vorzugsweise im Gas- oder Wasserinnendruckverfahren hergestellt ist.

16. Filtersystem nach einem der Ansprüche 8 und 11 bis 15, wobei die Hartkomponente (26) an ihrer, der Weichkomponente (27) abgewandten Seite über eine Struktur mit Erhöhungen (45) und Vertiefungen (46) verfügt.

## Claims

1. Filter element (12), in particular for the intake air of an internal combustion engine, comprising a filter body (13), in particular a winding filter (13) and a sealing (15) disposed in a circumferential direction around the filter body (13), the sealing (15) being provided with a hard component (26) and a soft component (27), the sealing (15) being connected with the filter body (13) by means of an adhesive (31), wherein the adhesive (31) forms an adhesive wedge between the soft component (27) of the sealing (15) and the filter body and the adhesive forming a direct connection of the soft component with the filter body.

2. Filter element (12) according to claim 1, wherein the sealing (15) is manufactured in 2-component injection molding, the soft component (27) being connected non-detachably at least in some partial areas with the hard component (26).

3. Filter element (12) according to one of the above claims, wherein the soft component (27) of the sealing (15) is provided with a sealing lip (29) which has a linear circumferential contact zone with the filter body (13), the sealing lip (29) contacting the filter body (13) in such a way that the adhesive remains during the manufacturing process in the intermediate space formed between the sealing (15) and the filter body (13).

4. Filter element (12) according to one of claims 1 or 2, wherein the sealing (14) is provided with a circumferential sealing bead (17) which can be clamped between two housing halves (24, 25), the soft component (27) being provided with a sealing section.

5. Filter element (12) according to one of the above claims, wherein the soft component (27) is provided with a damping section (38).

6. Filter element according to one of the above claims, wherein the soft component (27) is provided with a hollow space (42) which is preferably manufactured either by gas or water injection molding.

7. Filter element according to one of the above claims, wherein the hard component (26) has a structure with elevations (45) and recesses (46) at its side facing away from the soft component (27).

8. Filter system, in particular for the intake air of an internal combustion engine, comprising at least a filter housing (10, 11) with an intake (16) and an outlet (17), and a filter element (12), the filter element (12) being provided with a filter body (13) and a sealing (15) disposed in a circumferential direction around the filter body (13), the sealing (15) being provided with a hard component (26) and a soft component (27), the sealing (15) being connected with the filter body (13) by means of an adhesive (31), the adhesive (31) forming an adhesive wedge between one or both the components (26, 27) of the sealing (15) and the filter body, the filter housing (10, 11) being provided with at least two housing components (10, 11), the filter element (12) being disposed sealingly between the housing components (10, 11) by means of the sealing (15), wherein the sealing (15) with its hard component (26) contacts one of the housing components (10, 11) and with its soft component (27) the other housing component (10, 11).

9. Filter system according to claim 8, wherein the housing component (10, 11) corresponding with the soft component (27) is provided with a circumferential projection (37) which corresponds sealingly with the soft component (27).

10. Filter system according to one of claims 8 or 9, wherein the housing component (10, 11) corresponding with the hard component (26) has a geometry with elevations and/or recesses.

11. Filter system according to claim 8, wherein the sealing (15) is manufactured in 2-component injection molding, the soft component (27) being connected non-detachably at least in some partial areas with the hard component (26).

12. Filter system according to one of claims 8 and 11, wherein the soft component (27) of the sealing (15) is provided with a sealing lip (29) which is provided with a linear circumferential contact zone with the filter body (13), the sealing lip (29) contacting the filter body (13) in such a way that the adhesive remains during the manufacturing process in the intermediate space formed between the sealing (15) and the filter body (13).

13. Filter system according to one of claims 8, 11 and 12, wherein the sealing (14) is provided with a circumferential sealing bead (17) which can be clamped between two housing halves (24, 25), the soft component (27) being provided with a sealing section.

14. Filter system according to one of claims 8 and 11 to 13, wherein the soft component (27) is provided with a damping section (38).

15. Filter system according to one of claims 8 and 11 to 14, wherein the soft component (27) is provided with a hollow space (42) which is preferably manufactured either by gas or water injection molding.

16. Filter system according to one of claims 8 and 11 to 15, wherein the hard component (26) has a structure with elevations (45) and recesses (46) at its side facing away from the soft component (27).

## Revendications

1. Elément filtrant (12), en particulier pour l'air d'admission d'un moteur à combustion interne, présentant un corps de filtre (13), en particulier un enroulement de filtre (13) et un joint d'étanchéité (15) placé de manière périphérique autour du corps de filtre (13), le joint d'étanchéité (15) disposant d'un composant dur (26) et d'un composant mou (27), le joint d'étanchéité (15) étant relié au corps de filtre (13) par un adhésif (31), l'adhésif (31) formant un coin adhésif entre le composant mou (27) du joint d'étanchéité (15) et le corps de filtre et l'adhésif formant une liaison directe du composant mou avec le corps de filtre.

2. Elément filtrant (12) selon la revendication 1, le joint (15) étant fabriqué en pièce injectée à deux composants, le composant mou (27) étant relié au moins par endroits de manière inamovible au composant dur (26).

3. Elément filtrant (12) selon l'une des revendications précédentes, le composant mou (27) du joint d'étanchéité (15) disposant d'une lèvre d'étanchéité (29) qui dispose d'une zone de contact périphérique en forme de ligne avec le corps de filtre (13), la lèvre d'étanchéité (29) s'appuyant contre le corps de filtre (13) de telle manière que l'adhésif reste, lors de la fabrication, dans l'interstice formé entre le joint d'étanchéité (15) et le corps de filtre (13).

4. Elément filtrant (12) selon l'une des revendications 1 ou 2, le joint d'étanchéité (14) disposant d'un bourrelet d'étanchéité (17) périphérique, qui peut être serré entre deux moitiés de boîtier (24, 25), le composant mou (27) disposant d'une zone d'étanchéité.

5. Elément filtrant (12) selon l'une des revendications précédentes, le composant mou (27) disposant d'une zone d'amortissement (38).

6. Elément filtrant selon l'une des revendications précédentes, le composant mou (27) disposant d'une cavité (42), qui est fabriquée de préférence par un procédé à pression interne de gaz ou d'eau.

7. Elément filtrant selon l'une des revendications précédentes, le composant dur (26) disposant d'une structure avec des protubérances (45) et des renfoncements (46) sur sa face opposée au composant mou (27).

8. Système de filtre, en particulier pour l'air d'admission de moteur à combustion interne, présentant au moins un boîtier de filtre (10, 11) avec une admission (16) et une évacuation (17), et un élément filtrant (12), l'élément filtrant (12) présentant un corps de filtre (13) et un joint d'étanchéité (15) placé de manière périphérique autour du corps de filtre (13), le joint d'étanchéité (15) disposant d'un composant dur (26) et d'un composant mou (27), le joint d'étanchéité (15) étant relié au corps de filtre (13) par un adhésif (31), l'adhésif (31) formant un coin d'adhésif entre l'un des composants ou les deux composants (26, 27) du joint d'étanchéité (15) et le corps de filtre, le boîtier de filtre (10, 11) disposant d'au moins deux parties de boîtier (10, 11), l'élément filtrant (12) étant disposé de façon étanche au moyen du joint d'étanchéité (15) entre les parties de boîtier (10, 11), le joint d'étanchéité (15) touchant avec son composant dur (26) l'une des parties de boîtier (10, 11) et avec son composant mou (27) l'autre partie de boîtier (10, 11).

9. Système de filtre selon la revendication 8, la partie de boîtier (10, 11) correspondant avec le composant mou (27) disposant d'un ergot (37) périphérique, qui correspond de façon étanche avec le composant mou (27).

10. Système de filtre selon l'une des revendications 8 ou 9, la partie de boîtier (10, 11) correspondant avec le composant dur (26) disposant d'une géométrie avec des protubérances et/ou des renfoncements.

11. Système de filtre selon la revendication 8, le joint d'étanchéité (15) étant fabriqué en pièce injectée à deux composants, le composant mou (27) étant relié au moins par endroits de manière inamovible au composant dur (26).

12. Système de filtre selon l'une des revendications 8 et 11, le composant mou (27) du joint d'étanchéité (15) disposant d'une lèvre d'étanchéité (29), qui dispose d'une zone de contact périphérique en forme de ligne avec le corps de filtre (13), la lèvre d'étanchéité (29) s'appuyant contre le corps filtrant (13) de telle manière que l'adhésif reste, lors de la fabrication, dans l'interstice formée entre le joint d'étanchéité (15) et le corps de filtre (13).

13. Système de filtre selon l'une des revendications 8, 11 et 12, le joint d'étanchéité (14) disposant d'un bourrelet d'étanchéité (17) périphérique, qui peut être serré entre deux moitiés de boîtier (24, 25), le composant mou (27) disposant d'une zone d'étanchéité.

14. Système de filtre selon l'une des revendications 8 et 11 à 13, le composant mou (27) disposant d'une zone d'amortissement (38).

15. Système de filtre selon l'une des revendications 8 et 11 à 14, le composant mou (27) disposant d'une cavité (42), qui est fabriquée de préférence par un procédé à pression interne de gaz ou d'eau.

16. Système de filtre selon l'une des revendications 8 et 11 à 15, le composant dur (26) disposant d'une structure avec des protubérances (45) et des renfoncements (46) sur sa face opposée au composant mou (27).
